# EUROPEAN PATENT SPECIFICATION

(11) **EP 3 880 045 B1**
(45) Date of publication and mention of the grant of the patent: **31.08.2022**
(21) Application number: 19817431.0
(22) Date of filing: 12.11.2019
(51) Int. Cl.: A47J 37/12

(54) **A METHOD FOR DEEP FRYING A FOOD PRODUCT, AS WELL AS A DEEP FRYING DEVICE**
VERFAHREN ZUM FRITTIEREN EINES LEBENSMITTELPRODUKTES SOWIE FRITTIERGERÄT
PROCÉDÉ DE FRITURE EN PROFONDEUR DE PRODUIT ALIMENTAIRE, AINSI QU'UN DISPOSITIF DE FRITURE

(30) Priority: 16.11.2018 NL 2022010
(43) Date of publication of application: 22.09.2021
(73) Proprietor: D.N.A. Machinebouw B.V., 3443 BH Woerden (NL); Van Den Bosch, Petrus Wessel, 3443 BH Woerden (NL)
(72) Inventor: VAN DEN BOSCH, Petrus Wessel, 3443 BH Woerden (NL)
(74) Representative: Vernout, Robert
(86) International application number: PCT/NL2019/050739
(87) International publication number: WO 2020/101487

(56) References cited:
- EP-A1- 0 745 345
- EP-A1- 2 371 250
- US-A- 4 949 703

## Description

The present invention relates to a method for deep frying a food product in a deep frying device, wherein the deep frying device
- is arranged for heating fat using flue gas, and
- comprises a container, which container comprises wall sections, which wall sections comprise at least
   - a bottom wall section,
   - a front wall section,
   - a rear wall section, and
   - two upright longitudinal wall sections which interconnect said front wall section and rear wall section, and the wall sections define a lumen of the container;
wherein the container contains a fat; and
wherein, in order to deep fry the food product, the fat is heated using a burner, and the food product is deep fried in the heated fat.

Such a method is well known in the art for making fries, snacks and the like. During deep frying heat must be supplied. Firstly, in order to raise the temperature of the food product that mostly comes from the refrigerator or is at room temperature. Secondly, because during deep frying water vapour escapes from the food product, which costs a lot of energy.

For deep frying a container with fat is used. The container is usually heated at the bottom with a burner wherein the combustion gases flow from a first side of the container along the bottom side of the container to an opposite second side of the container for releasing heat to the container and thereby to the fat. A problem is that the temperature of the bottom of the container may become hot to such an extent that crumbs or the like of the food product that end up on the bottom will pyrolyse there and form harmful substances which may end up in the food product.

A deep frying device is known which comprises a couple of channels, which channels connect a first upright wall and an opposite second upright wall and are interconnected at the second upright wall. Herewith, combustion gases, after having passed the bottom, flow from the first upright wall via a first channel to the second upright wall and from the second upright wall via the second channel back again to the first upright wall where the combustion gases are discharged. The enlarged heat exchanging surface ensures that the heat difference between the heat supplying surfaces and the fat can be smaller, thus reducing the chances of pyrolysis of fat and/or food particles coming from the food to be fried.

A problem with the known deep frying device is that, in case a repair is needed for example due to cracking, this will be very time consuming. This means that the operating time is shorter and thus there will also be a loss of turnover.

A deep frying device is known from US4949703A which includes a liquid vessel assembled within a support frame, a pulse combustion burner mounted to the vessel and having a combustion chamber secured at its inlet end to a side wall of the vessel by means of screws and immersed in liquid in the vessel, a tailpipe connected to the combustion chamber and being extended outwardly through the vessel, and an exhaust muffler assembly connected to the tailpipe.

It is an object of the present invention to provide a method that can be used for deep frying effectively, but which method reduces wear of the frying device.

To this end, a method according to the preamble is characterized in that the container comprises a main wall section selected from
- the bottom wall section,
- the front wall section,
- the rear wall section, and
- an upright longitudinal wall section;
the deep frying device comprises a heating section, wherein the heating section comprises
- a wall unit, and
- a pipe section;
wherein the wall unit comprises an inlet for relatively hot flue gas and an outlet for relatively cold flue gas, and the pipe section protrudes from the main wall section into the lumen and is not rigidly connected to the other wall sections;
and wherein the pipe section protruding into the lumen of the container comprises
- at least one supply pipe for the relatively hot flue gas, and
- at least one outlet pipe for the relatively cold flue gas coming from the at least one supply pipe;
wherein for heating the fat hot flue gas is passed via the inlet of the wall unit through the pipe section and discharged via the outlet of the wall unit;
wherein at least one supply pipe of a plurality of supply pipes is provided with a plurality of channels provided transverse to the longitudinal direction of the supply pipe, which channels
- extend from the outer wall of the supply pipe via the inside of the supply pipe to an opposite part of the outer wall of the supply pipe
- comprise a first end situated relatively low and a second end situated relatively high in order to be able to pass fat from the lumen through the channel.

By deep frying using such a deep frying device the chances of damaging the deep frying device by deep frying are limited and an improved availability is achieved since the deep frying device will break down less quickly because of the daily changing temperatures.

Any contact between flames and the container and thus locally very high temperatures which can lead to pyrolysis, can be effectively avoided. Furthermore, it is possible to work with an enlarged heat exchanging surface without losing the ability to clean the inside of the surface of the container. Thanks to the enlarged heat exchanging surface, the fat can be heated quickly and will last a long time, also because pyrolysis is limited effectively.

The heat exchanging surface area of the heating section is preferably at least of the same size as the surface area of the bottom section, advantageously at least twice as big and more advantageously at least three times as big.

The channels enlarge the heat exchanging surface and fat heated by flue gas will rise in the channels and thus enable an even and quick heating.

Preferably, the pipe section is not at all connected to the other wall sections and most preferably also not in contact therewith. In that case the wall unit (and more specifically the pipe section) has a free distal end.

If the heat exchanging surface of the heating section shows a crack or has to be cleaned, the fat can be removed from the container and subsequently the heating section can be taken out quickly and easily. If so desired, the heating section can be replaced by another heating section as a result of which the deep frying device can be put into operation again immediately.

The heating module may for example be hung over the edge of the container.

EP0745345A1 discloses a deep fat frying device including a fat reservoir that has a heating section where in at least one conduction member is placed and that further includes one or several heating members in a combustion chamber situated under the reservoir meant to heat the fat, and that ducts are provided, through which combustion gases originating from the combustion chamber are passed to the conduction members and that further ducts are provided for in order to pass the combustion gases from the conduction member to an exhaust.

EP2371250A1 discloses an apparatus for cooking foods comprising a cooking tank intended for containing a liquid for cooking said foods, a heating element comprising a tubular element inside which a burner is inserted that is supplied with a gas fuel, and a discharge conduit for discharging fumes produced by the combustion of said gas fuel.

According to a favourable embodiment, the main wall section is selected from
- the bottom wall section,
- the front wall section, and
- an upright longitudinal wall section.

These have a better accessibility than the rear wall section, as a result of which replacement is easier. The main wall section is preferably the front wall section. Thus, an optimal accessibility is provided and the down time in case of a repair can be limited.

According to a favourable embodiment, the total of the cross sectional flow surface areas of the supply pipes is greater than the total cross sectional flow surface areas of the at least one outlet pipe.

A pipe for flue gas has an internal cross section and the surface area thereof is the cross sectional flow surface area of the pipe. With this favourable embodiment the hot flue gas flows through the supply pipes relatively slowly and can release heat well.

After it has cooled down it flows relatively quickly through the outlet pipe in order to be discharged, usually to a flue duct.

According to a favourable embodiment, the heating section has the form of a heating module which is detachably attached to the main wall section.

If the heat exchanging surface of the heating section shows a crack or has to be cleaned, the fat can be removed from the container and subsequently the heating section can be taken out quickly and easily. If so desired, the heating section can be replaced by another heating section as a result of which the deep frying device can be put into operation again immediately.

The heating module may for example be hung over the edge of the container.

According to a favourable embodiment, the main wall section comprises a through opening and the through opening of the main wall section is closed off with the wall unit.

Thus, inserting a basket with fries or other product to be deep fried is not hindered.

According to a favourable embodiment, a gasket is provided between the wall and the heating section.

The gasket usually comprises a temperature resistant and preferably resilient material.

According to a favourable embodiment, the gasket is a gasket that comprises graphite.

It has been found that this works well with the changing temperature circumstances that occur on a daily basis.

According to a favourable embodiment, the deep frying device contains a further inlet and a further outlet for guiding flue gas at the outside of a wall section, which further inlet is provided with a first connecting element and the outlet of the heating section is provided with a second connecting element for detachably connecting the outlet of the wall unit to the first connecting element.

Thus, an energy saving can be attained.

This favourable embodiment also makes it possible to discharge the flue gas at the back side or side of the deep frying device, as is common practice.

Advantageously, the deep frying device comprises a double wall comprising at least one of the wall sections as a wall, and the further inlet offers access for flue gas to the space between the walls of the double wall.

Finally, the present invention relates to deep frying device, wherein the deep frying device is arranged for heating flue gas using fat and comprises a container, which container comprises wall sections, which wall sections comprise at least
- a bottom wall section,
- a front wall section,
- a rear wall section,
- two upright longitudinal wall sections which interconnect said front wall section and rear wall section,
and the wall sections define a lumen of the container.

A problem with the known deep frying device is that in case a repair is needed, for instance when crack formation occurs, this is very time consuming. This means that the operating time will be less and thus implies a loss of turnover.

The present invention aims to provide a deep frying device having an improved availability.

To this end, deep frying device according to the preamble is characterized in that the container comprises a main wall section selected from
- the bottom wall section,
- the front wall section, and
- an upright longitudinal wall section;
wherein the heating section comprises
- a wall unit, and
- a pipe section;
wherein the wall unit comprises an inlet for relatively hot flue gas and an outlet for relatively cold flue gas, and the pipe section protrudes from the main wall section into the lumen and is not rigidly connected to the other wall sections;
wherein the pipe section protruding into the lumen of the container comprises
- at least one supply pipe for the relatively hot flue gas, and
- at least one outlet pipe for the relatively cold flue gas coming from the at least one supply pipe; and
wherein at least one supply pipe of a plurality of supply pipes is provided with a plurality of channels provided transverse to the longitudinal direction of the supply pipe, which channels
- extend from the outer wall of the supply pipe via the inside of the supply pipe to an opposite part of the outer wall of the supply pipe
- comprise a first end situated relatively low and a second end situated relatively high in order to be able to pass fat from the lumen through the channel.

Thus, a deep frying device is provided with which fat can be heated effectively while damage to the device by deep frying is limited.

If the heat exchanging surface shows a crack or has to be cleaned, the fat can be removed from the container and subsequently the heating section can be taken out quickly and easily. If so desired, the heating section can be replaced by another heating section as a result of which the deep frying device can be put into operation again immediately.

The heating module may for example be hung over the edge of the container.

The channels enlarge the heat exchanging surface and fat heated by flue gas will rise in the channels and thus enable an even and quick heating. Preferably, all supply pipes will be provided with such channels.

Advantageously, the outlet pipe is also provided with corresponding channels.

According to a favourable embodiment, the main wall section is selected from
- the bottom wall section,
- the front wall section, and
- an upright longitudinal wall section.

These have a better accessibility than the rear wall section, as a result of which replacement is easier. The main wall section is preferably the front wall section. Thus, an optimal accessibility is provided.

According to a favourable embodiment, the total of the cross sectional flow surface areas of the supply pipes is larger than the cross sectional flow surface areas of the outlet pipe.

A pipe for flue gas has an internal cross section and the surface area thereof is the cross sectional flow surface area. Thus, the hot flue gas flows through the supply pipes relatively slowly and can release heat well.

After it has cooled down it flows relatively quickly through the outlet pipe in order to be discharged, usually to a flue.

According to a favourable embodiment, the heating section has the form of a heating module which is detachably attached to the main wall section.

If the heat exchanging surface shows a crack or has to be cleaned, the fat can be removed from the container and subsequently the heating section can be taken out quickly and easily. If so desired, the heating section can be replaced by another heating section as a result of which the deep frying device can be put into operation again immediately.

The heating module may for example be hung over the edge of the container.

According to a favourable embodiment, the main wall section comprises a through opening and the through opening of the main wall section is closed off with the wall unit.

Thus, inserting a basket with fries or other product to be deep fried is not hindered.

The present invention also relates to a deep frying device with the measures of the subclaims described for the method only or in any combination, which for the sake of brevity will not be repeated.

According to a favourable embodiment, between the wall and the heating section a gasket is provided.

The gasket usually comprises a temperature resistant and preferably resilient material.

According to a favourable embodiment, the gasket is a gasket that comprises graphite.

It has been found that this works well with the changing temperature circumstances that occur on a daily basis.

The present invention will now be illustrated with reference to the drawing where
Fig. 1A shows a perspective view of a deep frying device not according to the invention;
Fig. 1B shows an explosion view of the deep frying device of Fig. 1A;
Fig. 2A and Fig. 2B show a perspective view of a heating module of the deep frying device of Fig. 1B; and
Fig. 3A and Fig. 3B show a perspective front view and rear view of a heating section for a deep frying device according to the invention.

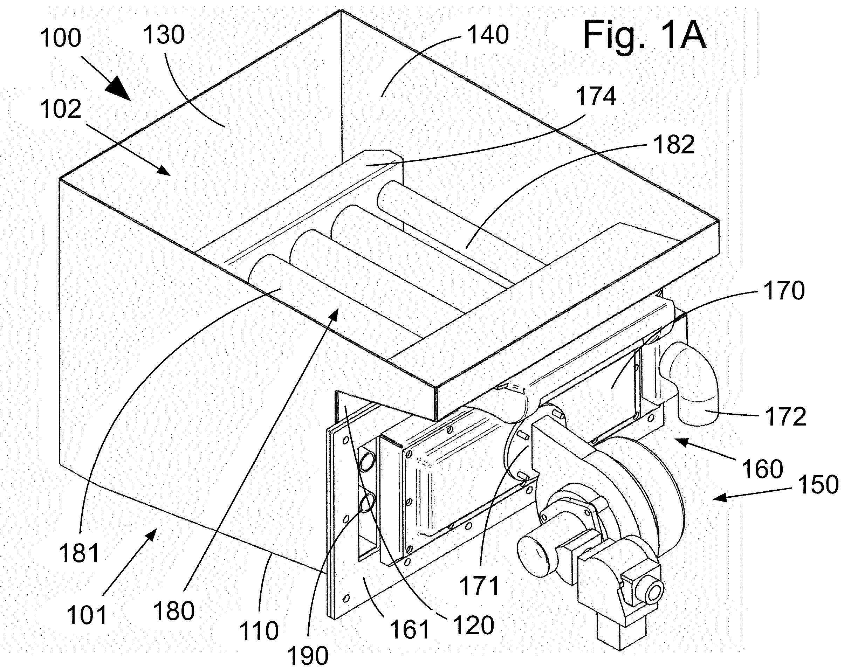

For deep frying a food product use is made of a deep frying device 100 (Fig. 1A), wherein the deep frying device 100 comprises a container 101, which container comprises wall sections, which wall sections comprise at least
- a bottom wall section 110,
- a front wall section 120,
- a rear wall section 130,
- two upright longitudinal wall sections 140 which interconnect said front wall section 120 and rear wall section 130. The container 101 defines a lumen 102 in which for deep frying fat (also including oil; a fat that is liquid at room temperature) is present.

The device 100 further comprises a burner 150 with which a fuel such as gas is burned, and the hot flue gases are used for heating the fat in order to deep fry therewith.

The deep frying device 100 comprises a main wall section selected from
- the bottom wall section 110,
- the front wall section 120, and
- an upright longitudinal wall section 140.

The deep frying device 100 further comprises a heating section 160, which heating section 160 comprises
- a wall unit 170, and
- a pipe section 180.

The wall unit 170 comprises an inlet 171 for relatively hot flue gas and an outlet 172 for relatively cold flue gas. The inlet 171 is connected to the burner 150 in order to lead hot flue gases through the pipe section 180 and discharge them via the outlet 172.

The burner 150 is a venturi burner, as is known from a central heating installation.

The pipe section 180 protrudes from the main wall section into the lumen 102 but is not connected fixedly to the other wall sections.

The pipe section 180 which protrudes into the lumen of the container comprises
- a plurality of supply pipes 181 for the relatively hot flue gas, and
- at least one outlet pipe 182 for the relatively cold flue gas coming from
   the plurality of supply pipes 181.

The flue gas is distributed from an upstream distribution chamber 173 and collected in the downstream collection chamber 174 from which it is discharged via the outlet pipe 182 via the outlet 172. Prior to use, the outlet pipe 182 is connected to a flue (not shown) of the kitchen or other room in which the deep frying takes place.

With the deep frying device 100 as discussed here, the heating section 160 has the form of a heating module 160, which can be attached to the main wall section (here front wall section 120). To this end, the heating section 160 comprises a flange 161 which can be attached to the front wall section 120 using bolts and protrudes into the front wall section into the lumen 102 via a through opening 121.

The module may be equipped with one or more temperature sensors 190 for controlling the burner 150.

For sealing use is made of a graphite-comprising gasket between the flange 161 and the front wall section 120.

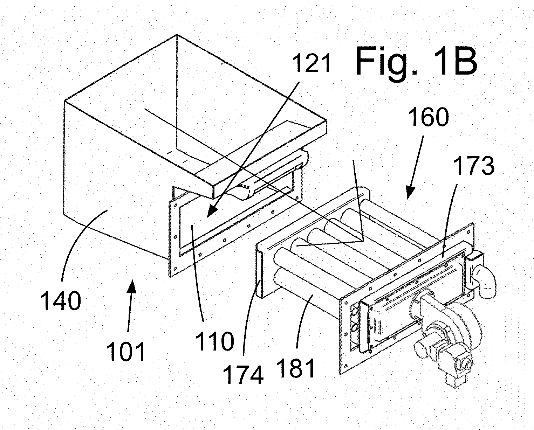

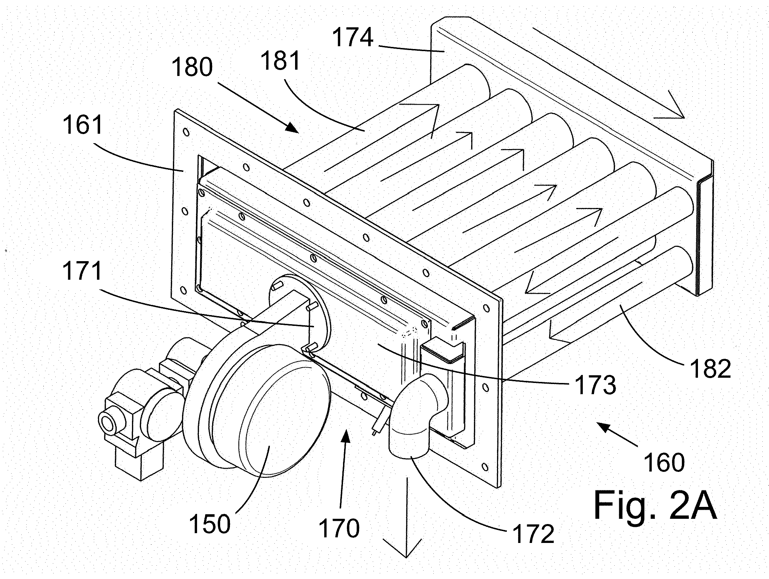

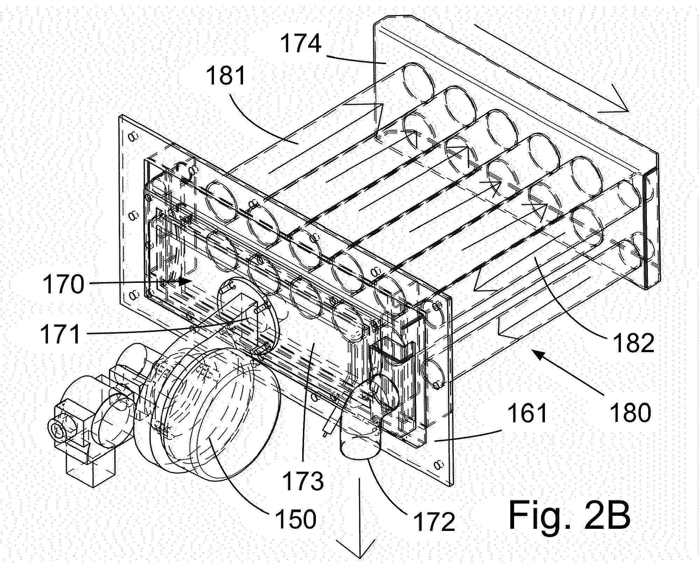

Fig. 2A and Fig. 2B (with hidden lines) show a perspective view of a heating module of the deep frying device 100 of Fig. 1B.

The heating module 160 also comprises the burner 150, whereby if a repair is needed the broken down heating module 160 can be replaced quickly by another one.

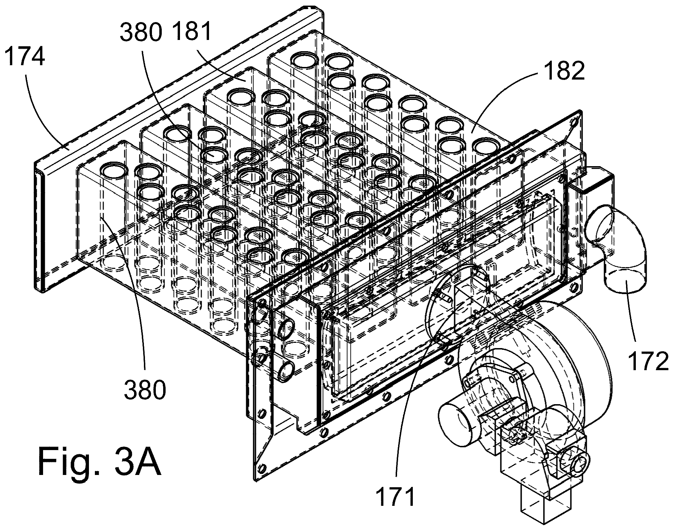

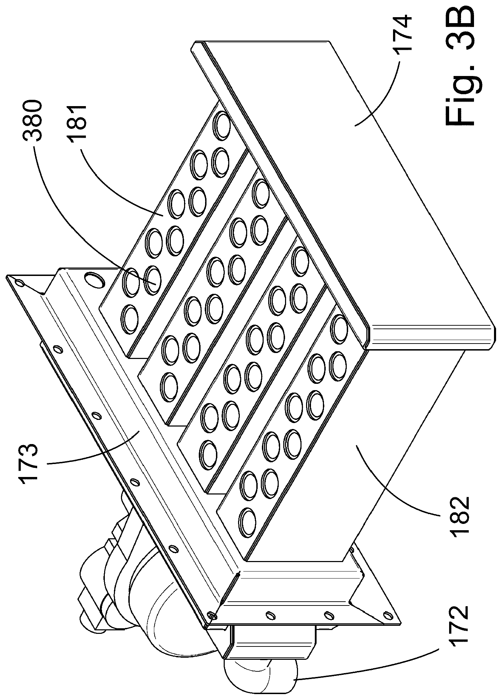

Fig. 3A and Fig. 3B show a perspective front view (indicated with hidden lines) and rear view of a heating module 160 for a deep frying device 100 according to the invention. With this embodiment according to the invention, the pipes for flue gas (supply pipes 181 and outlet pipe 182) are provided with channels in the form of small vertical tubes 380 which provide for surface area enlargement and for circulation of the liquid fat in the container.

## Claims

1. A method for deep frying a food product in a deep frying device (100), wherein the deep frying device (100)
- is arranged for heating fat using flue gas, and
- comprises a container (101), which container (101) comprises wall sections, which wall sections comprise at least
- a bottom wall section (110),
- a front wall section (120),
- a rear wall section (130), and
- two upright longitudinal wall sections (140) which interconnect said front wall section (120) and rear wall section (130), and the wall sections define a lumen (102) of the container (101);
wherein the container (101) contains a fat; and
wherein, in order to deep fry the food product, the fat is heated using a burner (150), and the food product is deep fried in the heated fat; wherein the container (101) comprises a main wall section selected from
- the bottom wall section (110),
- the front wall section (120),
- the rear wall section (130), and
- an upright longitudinal wall section (140);
the deep frying device (100) comprises a heating section (160), wherein the heating section (160) comprises
- a wall unit (170), and
- a pipe section (180);
wherein the wall unit (170) comprises an inlet (171) for relatively hot flue gas and an outlet (172) for relatively cold flue gas, and the pipe section (180) protrudes from the main wall section into the lumen (102) and is not rigidly connected to the other wall sections;
and wherein the pipe section (180) protruding into the lumen (102) of the container (101) comprises
- at least one supply pipe (181) for the relatively hot flue gas, and
- at least one outlet pipe (182) for the relatively cold flue gas coming from the at least one supply pipe (181);
wherein for heating the fat hot flue gas is passed via the inlet (171) of the wall unit (170) through the pipe section (180) and discharged via the outlet (172) of the wall unit (170);
wherein at least one supply pipe (181) of a plurality of supply pipes (181) is provided with a plurality of channels (380) provided transverse to the longitudinal direction of the supply pipe, which channels
- extend from the outer wall of the supply pipe (181) via the inside of the supply pipe (181) to an opposite part of the outer wall of the supply pipe (181)
- comprise a first end situated relatively low and a second end situated relatively high in order to be able to pass fat from the lumen through the channel.

2. The method according to claim 1, wherein the main wall section is selected from
- the bottom wall section (110),
- the front wall section (120), and
- an upright longitudinal wall section (140).

3. The method according to claim 1 or 2, wherein the total of the cross sectional flow surface areas of the supply pipes (181) is greater than the total cross sectional flow surface areas of the at least one outlet pipe (182).

4. The method according to any of the preceding claims, wherein the heating section (160) has the form of a heating module (160) which is detachably attached to the main wall section.

5. The method according to claim 4, wherein the main wall section comprises a through opening and the through opening of the main wall section is closed off with the wall unit (170).

6. The method according to any of the claims 4 or 5, wherein a gasket is provided between the wall and the heating section (160).

7. The method according to claim 6, wherein the gasket is a gasket that comprises graphite.

8. The method according to any of the preceding claims, wherein the deep frying device (100) contains a further inlet (171) and a further outlet (172) for guiding flue gas at the outside of a wall section, which further inlet (171) is provided with a first connecting element and the outlet of the heating section (160) is provided with a second connecting element for detachably connecting the outlet (172) of the wall unit (170) to the first connecting element.

9. Deep frying device (100), wherein the deep frying device (100) is arranged for heating flue gas using fat and comprises a container (101), which container (101) comprises wall sections, which wall sections comprise at least
- a bottom wall section (110),
- a front wall section (120),
- a rear wall section (130),
- two upright longitudinal wall sections (140) which interconnect said front wall section (120) and rear wall section (130),
and the wall sections define a lumen (102) of the container (101); wherein the container (101) comprises a main wall section selected from
- the bottom wall section (110),
- the front wall section (120), and
- an upright longitudinal wall section (140);
wherein the heating section (160) comprises
- a wall unit (170), and
- a pipe section (180);
wherein the wall unit (170) comprises an inlet (171) for relatively hot flue gas and an outlet (172) for relatively cold flue gas, and the pipe section (180) protrudes from the main wall section into the lumen (102) and is not rigidly connected to the other wall sections; wherein the pipe section (180) protruding into the lumen (102) of the container (101) comprises
- at least one supply pipe (181) for the relatively hot flue gas, and
- at least one outlet pipe (182) for the relatively cold flue gas coming from the at least one supply pipe (181); and
wherein at least one supply pipe (181) of a plurality of supply pipes (181) is provided with a plurality of channels (380) provided transverse to the longitudinal direction of the supply pipe, which channels
- extend from the outer wall of the supply pipe (181) via the inside of the supply pipe (181) to an opposite part of the outer wall of the supply pipe (181)
- comprise a first end situated relatively low and a second end situated relatively high in order to be able to pass fat from the lumen through the channel.

10. Deep frying device (100) according to claim 9, wherein the main wall section is selected from
- the bottom wall section (110),
- the front wall section (120), and
- an upright longitudinal wall section (140).

11. Deep frying device (100) according to any of the claims 9 or 10, wherein the total of the cross sectional flow surface areas of the supply pipes (181) is larger than the cross sectional flow surface areas of the outlet pipe (182).

12. Deep frying device (100) according to any of the claims 9 to 11, wherein the heating section (160) has the form of a heating module (160) which is detachably attached to the main wall section.

13. Deep frying device (100) according to claim 12, wherein the main wall section comprises a through opening (121) and the through opening (121) of the main wall section is closed off with the wall unit (170).

14. Deep frying device (100) according to any of the claims 12 or 13, wherein between the wall and the heating section (160) a gasket is provided.

15. Deep frying device (100) according to any of the claims 9 to 14, wherein the gasket is a gasket that comprises graphite.

## Patentansprüche

1. Verfahren zum Frittieren eines Lebensmittelprodukts in einer Frittiervorrichtung (100), wobei die Frittiervorrichtung (100)
- zum Erhitzen von Fett mithilfe von Abgas eingerichtet ist, und
- einen Behälter (101) umfasst, wobei der Behälter (101) Wandabschnitte umfasst, wobei die Wandabschnitte mindestens Folgendes umfassen
- einen unteren Wandabschnitt (110),
- einen vorderen Wandabschnitt (120),
- einen hinteren Wandabschnitt (130), und
- zwei senkrechte Längswandabschnitte (140), die den vorderen Wandabschnitt (120) und den hinteren Wandabschnitt (130) verbinden, und wobei die Wandabschnitte einen Hohlraum (102) des Behälters (101) definieren;
wobei der Behälter (101) Fett enthält; und
wobei, um das Lebensmittelprodukt zu frittieren, das Fett mithilfe eines Brenners (150) erhitzt wird und das Lebensmittelprodukt in dem erhitzten Fett frittiert wird; wobei der Behälter (101) einen Hauptwandabschnitt umfasst, der ausgewählt ist aus
- dem unteren Wandabschnitt (110),
- dem vorderen Wandabschnitt (120),
- dem hinteren Wandabschnitt (130), und
- einem senkrechten Längswandabschnitt (140) ;
wobei die Frittiervorrichtung (100) einen Heizabschnitt (160) umfasst, wobei der Heizabschnitt (160) Folgendes umfasst
- eine Wandeinheit (170), und
- einen Rohrabschnitt (180);
wobei die Wandeinheit (170) einen Einlass (171) für relativ heißes Abgas und einen Auslass (172) für relativ kaltes Abgas umfasst, und wobei der Rohrabschnitt (180) aus dem Hauptwandabschnitt in den Hohlraum (102) ragt und nicht starr mit den anderen Wandabschnitten verbunden ist;
und wobei der Rohrabschnitt (180), der in den Hohlraum (102) des Behälters (101) ragt, Folgendes umfasst
- mindestens ein Zufuhrrohr (181) für das relativ heiße Abgas, und
- mindestens ein Auslassrohr (182) für das relativ kalte Abgas, das aus dem mindestens einen Zufuhrrohr (181) kommt;
wobei zum Erhitzen des Fetts heißes Abgas über den Einlass (171) der Wandeinheit (170) durch den Rohrabschnitt (180) geleitet wird und über den Auslass (172) der Wandeinheit (170) abgelassen wird;
wobei mindestens ein Zufuhrrohr (181) der Mehrzahl von Zufuhrrohren (181) mit einer Mehrzahl von Kanälen (380) bereitgestellt ist, die quer zu der Längsrichtung des Zufuhrrohrs bereitgestellt sind, wobei die Kanäle
- sich von der Außenwand des Zufuhrrohrs (181) über das Innere des Zufuhrrohrs (181) zu einem gegenüberliegenden Teil der Außenwand des Zufuhrrohrs (181) erstrecken,
- ein erstes Ende, das relativ niedrig angeordnet ist, und ein zweites Ende, das relativ hoch angeordnet ist, um Fett von dem Hohlraum durch den Kanal leiten zu können, umfassen.

2. Verfahren nach Anspruch 1, wobei der Hauptwandabschnitt ausgewählt ist aus
- dem unteren Wandabschnitt (110),
- dem vorderen Wandabschnitt (120), und
- einem senkrechten Längswandabschnitt (140).

3. Verfahren nach Anspruch 1 oder 2, wobei die Gesamtheit der Querschnittsströmungsflächenbereiche der Zufuhrrohre (181) größer als die Gesamtquerschnittsströmungsflächenbereiche des mindestens einen Auslassrohrs (182) ist.

4. Verfahren nach einem der vorhergehenden Ansprüche, wobei der Heizabschnitt (160) die Form eines Heizmoduls (160) aufweist, das abnehmbar an dem Hauptwandabschnitt angebracht wird.

5. Verfahren nach Anspruch 4, wobei der Hauptwandabschnitt eine Durchgangsöffnung umfasst und die Durchgangsöffnung des Hauptwandabschnitts mit der Wandeinheit (170) verschlossen wird.

6. Verfahren nach einem der Ansprüche 4 oder 5, wobei eine Dichtung zwischen der Wand und dem Heizabschnitt (160) bereitgestellt ist.

7. Verfahren nach Anspruch 6, wobei die Dichtung eine Dichtung ist, die Graphit umfasst.

8. Verfahren nach einem der vorhergehenden Ansprüche, wobei die Frittiervorrichtung (100) einen weiteren Einlass (171) und einen weiteren Auslass (172) zum Führen von Abgas an der Außenseite eines Wandabschnitts enthält, wobei der weitere Einlass (171) mit einem ersten Verbindungselement bereitgestellt ist und der Auslass des Heizabschnitts (160) mit einem zweiten Verbindungselement zum abnehmbaren Verbinden des Auslasses (172) der Wandeinheit (170) mit dem ersten Verbindungselement bereitgestellt ist.

9. Frittiervorrichtung (100), wobei die Frittiervorrichtung (100) zum Erhitzen von Abgas mithilfe von Fett eingerichtet ist und einen Behälter (101) umfasst, wobei der Behälter (101) Wandabschnitte umfasst, wobei die Wandabschnitte mindestens Folgendes umfassen
- einen unteren Wandabschnitt (110),
- einen vorderen Wandabschnitt (120),
- einen hinteren Wandabschnitt (130),
- zwei senkrechte Längswandabschnitte (140), die den vorderen Wandabschnitt (120) und den hinteren Wandabschnitt (130) verbinden,
und wobei die Wandabschnitte einen Hohlraum (102) des Behälters (101) definieren;
wobei der Behälter (101) einen Hauptwandabschnitt umfasst, der ausgewählt ist aus
- dem unteren Wandabschnitt (110),
- dem vorderen Wandabschnitt (120), und
- einem senkrechten Längswandabschnitt (140);
wobei der Heizabschnitt (160) Folgendes umfasst
- eine Wandeinheit (170), und
- einen Rohrabschnitt (180);
wobei die Wandeinheit (170) einen Einlass (171) für relativ heißes Abgas und einen Auslass (172) für relativ kaltes Abgas umfasst, und wobei der Rohrabschnitt (180) aus dem Hauptwandabschnitt in den Hohlraum (102) ragt und nicht starr mit den anderen Wandabschnitten verbunden ist;
und wobei der Rohrabschnitt (180), der in den Hohlraum (102) des Behälters (101) ragt, Folgendes umfasst
- mindestens ein Zufuhrrohr (181) für das relativ heiße Abgas, und
- mindestens ein Auslassrohr (182) für das relativ kalte Abgas, das aus dem mindestens einen Zufuhrrohr (181) kommt; und
wobei mindestens ein Zufuhrrohr (181) der Mehrzahl von Zufuhrrohren (181) mit einer Mehrzahl von Kanälen (380) bereitgestellt ist, die quer zu der Längsrichtung des Zufuhrrohrs bereitgestellt sind, wobei die Kanäle
- sich von der Außenwand des Zufuhrrohrs (181) über das Innere des Zufuhrrohrs (181) zu einem gegenüberliegenden Teil der Außenwand des Zufuhrrohrs (181) erstrecken,
- ein erstes Ende, das relativ niedrig angeordnet ist, und ein zweites Ende, das relativ hoch angeordnet ist, um Fett von dem Hohlraum durch den Kanal leiten zu können, umfassen.

10. Frittiervorrichtung (100) nach Anspruch 9, wobei der Hauptwandabschnitt ausgewählt ist aus
- dem unteren Wandabschnitt (110),
- dem vorderen Wandabschnitt (120), und
- einem senkrechten Längswandabschnitt (140).

11. Frittiervorrichtung (100) nach einem der Ansprüche 9 oder 10, wobei die Gesamtheit der Querschnittsströmungsflächenbereiche der Zufuhrrohre (181) größer als die Querschnittsströmungsflächenbereiche des Auslassrohrs (182) ist.

12. Frittiervorrichtung (100) nach einem der Ansprüche 9 bis 11, wobei der Heizabschnitt (160) die Form eines Heizmoduls (160) aufweist, das abnehmbar an dem Hauptwandabschnitt angebracht ist.

13. Frittiervorrichtung (100) nach Anspruch 12, wobei der Hauptwandabschnitt eine Durchgangsöffnung (121) umfasst und die Durchgangsöffnung (121) des Hauptwandabschnitts mit der Wandeinheit (170) verschlossen ist.

14. Frittiervorrichtung (100) nach einem der Ansprüche 12 oder 13, wobei zwischen der Wand und dem Heizabschnitt (160) eine Dichtung bereitgestellt ist.

15. Frittiervorrichtung (100) nach einem der Ansprüche 9 bis 14, wobei die Dichtung eine Dichtung ist, die Graphit umfasst.

## Revendications

1. Procédé destiné à la friture d'une denrée alimentaire dans un dispositif de friture (100), dans lequel le dispositif de friture (100) :
- est conçu pour chauffer une matière grasse en utilisant du gaz de fumée ; et
- comprend un récipient (101), le récipient en question (101) comprenant des tronçons faisant office de parois, lesdits tronçons faisant office de parois comprenant au moins :
- un tronçon faisant office de paroi de base (110) ;
- un tronçon faisant office de paroi avant (120) ;
- un tronçon faisant office de paroi arrière (130) ; et
- deux tronçons faisant office de parois longitudinales dressées (140) qui relient l'un à l'autre ledit tronçon faisant office de paroi avant (120) et ledit tronçon faisant office de paroi arrière (130) ; et
les tronçons faisant office de parois définissent une lumière (102) du récipient (101) ;
dans lequel le récipient (101) contient une matière grasse ; et
dans lequel, dans le but de soumettre la denrée alimentaire à une friture, la matière grasse est chauffée en utilisant un brûleur (150), et la denrée alimentaire est soumise à une friture dans la matière grasse qui a été chauffée ; dans lequel le récipient (101) comprend un tronçon faisant office de paroi principale, qui est choisi parmi :
- le tronçon faisant office de paroi de base (110) ;
- le tronçon faisant office de paroi avant (120) ;
- le tronçon faisant office de paroi arrière (130) ; et
- un tronçon faisant office de paroi longitudinale dressée (140) ;
le dispositif de friture (100) comprend un tronçon de chauffage (160) ; dans lequel le tronçon de chauffage (160) comprend :
- une unité sous la forme d'une paroi (170) ; et
- un tronçon faisant office de tuyau (180) ;
dans lequel l'unité sous la forme d'une paroi (170) comprend une entrée (171) pour un gaz de fumée relativement chaud et une sortie (172) pour un gaz de fumée relativement froid, et le tronçon faisant office de tuyau (180) fait saillie à partir du tronçon faisant office de paroi principale jusque dans la lumière (102) et n'est pas relié de manière rigide aux autres tronçons faisant office de parois ;
et dans lequel le tronçon faisant office de tuyau (180) qui fait saillie jusque dans la lumière (102) du récipient (101) comprend :
- au moins un tuyau d'alimentation (181) pour le gaz de fumée relativement chaud ; et
- au moins un tuyau de sortie (182) pour le gaz de fumée relativement froid qui provient dudit au moins un tuyau d'alimentation (181) ;
dans lequel, pour le chauffage de la matière grasse, on fait passer du gaz de fumée chaud par l'intermédiaire de l'entrée (171) de l'unité sous la forme d'une paroi (170) à travers le tronçon faisant office de tuyau (180) et on l'évacue par l'intermédiaire de la sortie (172) de l'unité sous la forme d'une paroi (170) ;
dans lequel au moins un tuyau d'alimentation (181) parmi un certain nombre de tuyaux d'alimentation (181) est équipé d'un certain nombre de canaux (380) qui sont prévus en direction transversale par rapport à la direction longitudinale du tuyau d'alimentation, les canaux en question :
- s'étendant à partir de la paroi externe du tuyau d'alimentation (181) en passant par l'intérieur du tuyau d'alimentation (181) jusqu'à une partie opposée de la paroi externe du tuyau d'alimentation (181) ;
- comprenant une première extrémité qui est située relativement bas et une deuxième extrémité qui est située relativement haut pour pouvoir faire passer de la matière grasse à partir de la lumière à travers le canal.

2. Procédé conformément à la revendication 1, dans lequel le tronçon faisant office de paroi principale est choisi parmi :
- le tronçon faisant office de paroi de base (110) ;
- le tronçon faisant office de paroi avant (120) ; et
- un tronçon faisant office de paroi longitudinale dressée (140).

3. Procédé conformément à la revendication 1 ou 2, dans lequel le total des aires de surfaces d'écoulement des tuyaux d'alimentation (181) en section transversale est supérieur au total des aires de surfaces d'écoulement dudit au moins un tuyau de sortie (182) en section transversale.

4. Procédé conformément à l'une quelconque des revendications précédentes, dans lequel le tronçon de chauffage (160) prend la forme d'un module de chauffage (160) qui est fixé de manière amovible au tronçon faisant office de paroi principale.

5. Procédé conformément à la revendication 4, dans lequel le tronçon faisant office de paroi principale comprend une ouverture de passage et l'ouverture de passage du tronçon faisant office de paroi principale est obturée avec l'unité sous la forme d'une paroi (170).

6. Procédé conformément à l'une quelconque des revendications 4 ou 5, dans lequel on prévoit un joint d'étanchéité statique entre la paroi et le tronçon de chauffage (160).

7. Procédé conformément à la revendication 6, dans lequel le joint d'étanchéité statique est un joint d'étanchéité statique qui comprend du graphite.

8. Procédé conformément à l'une quelconque des revendications précédentes, dans lequel le dispositif de friture (100) contient une entrée supplémentaire (171) et une sortie supplémentaire (172) pour le guidage du gaz de fumée à l'extérieur d'un tronçon faisant office de paroi, l'entrée supplémentaire en question (171) étant équipée d'un premier élément de liaison et la sortie du tronçon de chauffage (160) étant équipée d'un deuxième élément de liaison à des fins de liaison, de manière amovible, de la sortie (172) de l'unité sous la forme d'une paroi (170) au premier élément de liaison.

9. Dispositif de friture (100), dans lequel le dispositif de friture (100) est conçu pour chauffer une matière grasse en utilisant du gaz de fumée et comprend un récipient (101), le récipient question (101) comprenant des tronçons faisant office de parois, lesdits tronçons faisant office de parois comprenant au moins :
- un tronçon faisant office de paroi de base (110) ;
- un tronçon faisant office de paroi avant (120) ;
- un tronçon faisant office de paroi arrière (130) ;
- deux tronçons faisant office de parois longitudinales dressées (140) qui relient l'un à l'autre ledit tronçon faisant office de paroi avant (120) et ledit tronçon faisant office de paroi arrière (130) ;
et les tronçons faisant office de parois définissent une lumière (102) du récipient (101) ;
dans lequel le récipient (101) comprend un tronçon faisant office de paroi principale, qui est choisi parmi :
- le tronçon faisant office de paroi de base (110) ;
- le tronçon faisant office de paroi avant (120) ; et
- un tronçon faisant office de paroi longitudinale dressée (140) ;
dans lequel le tronçon de chauffage (160) comprend :
- une unité sous la forme d'une paroi (170) ; et
- un tronçon faisant office de tuyau (180) ;
dans lequel l'unité sous la forme d'une paroi (170) comprend une entrée (171) pour du gaz de fumée relativement chaud et une sortie (172) pour du gaz de fumée relativement froid, et le tronçon faisant office de tuyau (180) fait saillie à partir du tronçon faisant office de paroi principale jusque dans la lumière (102) et n'est pas relié de manière rigide aux autres tronçons faisant office de parois ;
dans lequel le tronçon faisant office de tuyau (180) qui fait saillie jusque dans la lumière (102) du récipient (101) comprend :
- au moins un tuyau d'alimentation (181) pour le gaz de fumée relativement chaud ; et
- au moins un tuyau de sortie (182) pour le gaz de fumée relativement froid qui provient dudit au moins un tuyau d'alimentation (181) ;
dans lequel au moins un tuyau d'alimentation (181) parmi un certain nombre de tuyaux d'alimentation (181) est équipé d'un certain nombre de canaux (380) qui sont prévus en direction transversale par rapport à la direction longitudinale du tuyau d'alimentation, les canaux en question :
- s'étendant à partir de la paroi externe du tuyau d'alimentation (181) en passant par l'intérieur du tuyau d'alimentation (181) jusqu'à une partie opposée de la paroi externe du tuyau d'alimentation (181) ;
- comprenant une première extrémité qui est située relativement bas et une deuxième extrémité qui est située relativement haut pour pouvoir faire passer de la matière grasse à partir de la lumière à travers le canal.

10. Dispositif de friture (100) conformément à la revendication 9, dans lequel le tronçon faisant office de paroi principale est choisi parmi :
- le tronçon faisant office de paroi de base (110) ;
- le tronçon faisant office de paroi avant (120) ; et
- un tronçon faisant office de paroi longitudinale dressée (140)

11. Dispositif de friture (100) conformément à l'une quelconque des revendications 9 ou 10, dans lequel le total des aires de surfaces d'écoulement des tuyaux d'alimentation (181) en section transversale est supérieur au total des aires de surfaces d'écoulement dudit au moins un tuyau de sortie (182) en section transversale.

12. Dispositif de friture (100) conformément à l'une quelconque des revendications 9 à 11, dans lequel le tronçon de chauffage (160) prend la forme d'un module de chauffage (160) qui est fixé de manière amovible au tronçon faisant office de paroi principale.

13. Dispositif de friture (100) conformément à la revendication 12, dans lequel le tronçon faisant office de paroi principale comprend une ouverture de passage (121) et l'ouverture de passage (121) du tronçon faisant office de paroi principale est obturée avec l'unité sous la forme d'une paroi (170).

14. Dispositif de friture (100) conformément à l'une quelconque des revendications 12 ou 13, dans lequel on prévoit un joint d'étanchéité statique entre la paroi et le tronçon de chauffage (160).

15. Dispositif de friture (100) conformément à l'une quelconque des revendications 9 à 14, dans lequel le joint d'étanchéité statique est un joint d'étanchéité statique qui comprend du graphite.
